# EUROPEAN PATENT APPLICATION

(11) **EP 4 810 813 A1**
(43) Date of publication of application: **23.09.2026**
(21) Application number: 26165492.5
(22) Date of filing: 17.03.2026
(51) Int. Cl.: F16C 19/52, F16C 41/00, F16C 19/06

(54) **SHAFT GROUNDING MEMBER FOR ROLLING BEARING AND ROLLING BEARING UNIT**

(30) Priority: 19.03.2025 JP 2025044813
(71) Applicant: NSK-WARNER K.K., Tokyo 141-8560 (JP)
(72) Inventor: SETOI, Mutsumi, Fukuroi-shi, Shizuoka, 437-8535 (JP); FURUYA, Masatomo, Fukuroi-shi, Shizuoka, 437-8535 (JP); MURAMATSU, Kazuhiko, Fukuroi-shi, Shizuoka, 437-8535 (JP)
(74) Representative: Berggren Oy

(57) **Abstract**

A shaft grounding member for a rolling bearing, the shaft grounding member being mounted on a rolling bearing unit including the rolling bearing in which one bearing ring is a fixed ring and the other bearing ring is a rotating ring, the shaft grounding member includes: a spring plate including an annular portion, a coupling portion extending continuously from the annular portion in a radial direction, and an elastic portion bending from the coupling portion in an axial direction of the rotating ring, the spring plate being made of a thin plate of a conductive material; and a soft conductive member mounted on a surface of the elastic portion that faces a rotating member to which the rotating ring is fitted. The soft conductive member is capable of abutting against at least a part of a peripheral surface of the rotating member.

## Description

### BACKGROUND

### 1. Field of the Invention

The present disclosure relates to a shaft grounding member for a rolling bearing that prevents occurrence of electrolytic corrosion or generation of electromagnetic noise of a rolling bearing in a rolling bearing unit, and the rolling bearing unit provided with the shaft grounding member for a rolling bearing.

### 2. Description of the Related Art

In recent years, there has been a progress in practical use of an electric vehicle in which an electric motor serving as a drive source is provided inside or in the vicinity of the wheels to drive the wheels. Such a drive motor is generally called an in-wheel motor. The general in-wheel motor has a structure in which a stator is fixed to a motor housing and a rotor is provided on the inner diameter side of the stator with a gap in the radial direction, and is a so-called inner rotor type motor. As a drive method for the in-wheel motor, a brushless DC motor driven by an inverter is often used in consideration of the performance and the control performance of the motor.

In the method of driving with the inverter, a potential difference occurs between the stator and the rotor due to the parasitic capacitance between the stator and the rotor. This potential difference generates a so-called shaft voltage and shaft current, and when this shaft current passes through the rolling bearing that supports the rotor, a phenomenon called "electrolytic corrosion" occurs that damages the rolling bearing. Specifically, the current flows locally in the contact portion between the raceway surfaces of the outer ring and the inner ring of the rolling bearing and the rolling elements, and the raceway surface or the rolling surface is melted and becomes uneven. This not only roughens the rolling surface and the rolling element surface of the bearing, causing the noise and the vibration, but also affects the life of the bearing if excessive electrolytic corrosion occurs.

In order to prevent the electrolytic corrosion of the rolling bearing, a conductive member is sometimes used. For example, JP2011-135720A and JP2011-135722A propose a conductive member including a contact body that electrically conducts with the rotor of the motor, an elastic body that presses the contact body toward the rotor, and a storage portion that stores the contact body and the elastic body, in which the storage portion is provided in a motor housing and electrically connected to the motor stator via the motor housing.

JP2020-127257A proposes a grounding device in which the distal end portion of a broom-shaped conductive fiber is brought into contact with the outer peripheral surface of a rotating shaft.

Further, JP2002-146568A proposes an electrolytic corrosion prevention device in which an annular seat portion in contact with the end surface of a bearing outer ring is bent into a wave washer shape, an elastic conductor including a contact piece that is extended from the inner side of the annular seat portion and that is in contact with the vicinity of the end surface center portion of the rotating shaft is used, and the surface of the annular seat portion is pressed by the lid-shaped wall of a bearing housing and electrically conducted in the state in which the contact piece abuts against the vicinity of the end surface center portion of the rotating shaft fitted to the bearing inner ring, and in which the annular seat portion is overlapped with the end surface of the bearing outer ring fitted in the bearing housing.

Further, JPH04-8820U proposes that a rod-shaped conductive brush is accommodated in a support hole formed in either one of two bearing rings, the distal end of the conductive brush is biased toward the other bearing ring and is brought into sliding contact with the other bearing ring by the elastic member, and the two bearing rings are electrically conducted.

JP2017-060401A proposes that the distal end portion of a shaft grounding brush made of a carbon filament abuts against an extension shaft, a shaft voltage generated in the shaft is grounded and removed, and electrolytic corrosion generated in a bearing is prevented.

In the bearing, measures against electromagnetic noise generated by electromagnetic interference are required, and various devices for preventing the generation of electromagnetic noise have been proposed.

For example, JP2024-130948A proposes that a rod-shaped carbon brush having conductivity is accommodated between an inner ring and a metal ring, and the distal end of the carbon brush attached to the metal ring is biased against the inner ring by a spring and brought into sliding contact with the inner ring, thereby imparting conductivity performance to the conductive bearing and allowing a current flowing through the conductive bearing to flow outside the system via the metal ring and the brush to remove electromagnetic noise.

JP2023-018214A proposes a conductive device capable of releasing electromagnetic noise by preventing the generation of an oil film formed between a conductive rubber lip mounted on a rotating shaft and a metal housing by a centrifugal force or controlling the oil film thickness. By preventing the generation of an oil film or reducing the oil film thickness, it is possible to reduce the electrical resistance of the oil film and release electromagnetic noise from the rotating shaft to the housing.

JP2022-139252A proposes that a rolling element having conductivity is rolled between an outer ring and an inner ring in a state in which an oil film is cut to secure a path for charges, and the impedance between the outer ring and the inner ring or the impedance of the entire bearing is significantly reduced to improve the electromagnetic noise prevention effect and the electrolytic corrosion prevention effect.

JP2000-244180A proposes an electromagnetic noise prevention device in which a metal case of an electric motor and a rotating shaft in the electric motor are electrically conducted by a conduction unit such as a sliding contact member, so that electromagnetic noise induced in the rotating shaft is released to a metal electric motor housing grounded to a vehicle body.

However, in the technique described in any piece of the related arts, the abrasion powder generated from the conductive member may contaminate the lubricant or the grease composition sealed for lubrication and may damage the raceway surface or the rolling surface. The mating member of the conductive member may be damaged and the abrasion powder may be generated.

Specifically, in JP2011-135720A and JP2011-135722A, the contact body, the elastic body, and the storage body are metal members and are brought into sliding contact with one another due to the vibration of the motor, and thus the metal powder is generated. It is necessary to provide the contact body, the elastic body, and the storage body in the motor housing, and a space therefor is also required.

In JP2020-127257A, the distal end portion of the broom-shaped conductive fiber is brought into contact with the outer peripheral surface of the rotating shaft. However, in order to increase the contact area between the distal end portion of the broom-shaped conductive fiber and the rotating shaft as compared to when the distal end portion of the broom-shaped conductive fiber and the rotating shaft are simply brought into contact, the broom-shaped conductive fiber is brought into contact with the outer peripheral surface of the rotating shaft in the state of being bent. That is, since the distal end portion of the broom-shaped conductive fiber is in contact with the outer peripheral surface of the rotating shaft with a relatively strong pressing force, the abrasion powder is generated. At the same time, the outer peripheral surface of the rotating shaft, which is the mating member of the broom-shaped conductive fiber, is also damaged.

In JP2002-146568A, both the elastic conductor and the rotating shaft are made of metal, and the metal powder is generated when the elastic conductor and the rotating shaft come into sliding contact. At the same time, the end surface of the rotating shaft, which is the mating member of the elastic conductor, is damaged.

In JPH04-8820U, since the distal end of the rod-shaped conductive brush is in contact with the other bearing ring in the biased state, the abrasion powder of the conductive brush is generated. At the same time, the other bearing ring, which is the mating member of the conductive brush, is also damaged. Further, it is necessary to form a support hole for accommodating the conductive brush and the elastic member on the bearing ring, and a large load is applied to the bearing ring.

In JP2017-060401A, since the distal end portion of the shaft grounding brush made of the carbon filament abuts against the extension shaft, the abrasion powder of the shaft grounding brush is generated. At the same time, the extension shaft, which is the mating member of the shaft grounding brush, is also damaged.

In the bearing disclosed in the related arts excepting JP2000-244180A, frictional heat may be generated due to sliding contact between the conductive member and the mating member during use, and thus the durability of the bearing is reduced. Since the peripheral speed of the rotating member has been improved with the recent improvement in performance of the motor, further prevention of the temperature rise is required.

In JP2000-244180A, a wear-resistant member is selected as the sliding contact member, but the effect of reducing wear is not sufficient.

Generally, a lubricant is introduced into the bearing. Alternatively, the flow of the lubricant may be hindered depending on the structure of the conductive member or the shaft grounding brush. When the lubricant is excessively supplied into the bearing, stirring resistance increases, and temperature and torque increase. Therefore, a shaft grounding member capable of appropriately discharging the lubricant is required.

In recent years, demands for smaller products have been increasing for the purpose of cost reduction and weight reduction. With the miniaturization of the product, the diameters of the bearing and the rotating body that are provided in the motor incorporated in the product also decrease, but the area of the contact portion between the conductive member and the rotating shaft or the inner ring depends on the diameters of the bearing and the rotating body and the shape of the conductive member. Therefore, when the area of the contact portion described above is designed to be large in order to improve the conductivity, the discharge of the lubricant may be hindered.

### SUMMARY

An object of the present disclosure is to provide a shaft grounding member and a rolling bearing unit provided with the shaft grounding member. Accordingly, the shaft grounding member and the rolling bearing unit can reduce generation of abrasion powder from a conductive member or abrasion powder due to sliding contact between the conductive member and a mating member or damage to the mating member, can ensure excellent conductivity without inhibiting discharge of a lubricant, can prevent electrolytic corrosion of a rolling bearing by reducing a shaft voltage which is a potential difference between a rotating member and a fixing member, can release electromagnetic noise through a gap between the rotating member and the fixing member, and can be applied to an existing bearing without any limitation on the type of the bearing.

The above object of the present disclosure is achieved by the following configurations [1] to [6].
[1] A shaft grounding member for a rolling bearing, the shaft grounding member being mounted on a rolling bearing unit including the rolling bearing in which one bearing ring is a fixed ring and the other bearing ring is a rotating ring, the shaft grounding member including: a spring plate including an annular portion, a coupling portion extending continuously from the annular portion in a radial direction, and an elastic portion bending from the coupling portion in an axial direction of the rotating ring, the spring plate being made of a thin plate of a conductive material; and a soft conductive member mounted on a surface of the elastic portion that faces a rotating member to which the rotating ring is fitted, in which the soft conductive member is capable of abutting against at least a part of a peripheral surface of the rotating member.
[2] The shaft grounding member for a rolling bearing according to [1], in which the soft conductive member is made of at least one selected from a resin-impregnated non-woven fabric, a non-woven fabric, a resin-impregnated woven fabric, a woven fabric, a resin-impregnated soft porous body, and a soft porous body.
[3] The shaft grounding member for a rolling bearing according to [1], in which the annular portion is pressed against a side surface of the fixed ring with a spacer interposed therebetween.
[4] The shaft grounding member for a rolling bearing according to [1], in which the spring plate includes the annular portion, the one coupling portion extending continuously from the annular portion in the radial direction, and an elastic portion bending from the coupling portion in the axial direction of the rotating ring.
[5] The shaft grounding member for a rolling bearing according to [4], in which the elastic portion extends while being curved or bent along a circumferential direction of the rotating member.
[6] A rolling bearing unit including: a rolling bearing in which one bearing ring is a fixed ring and the other bearing ring is a rotating ring; and the shaft grounding member for a rolling bearing according to any one of [1] to [5].

The shaft grounding member according to the present disclosure can prevent energization to the inside of the bearing, reduce a shaft voltage which is a potential difference between the rotating member and the fixing member, prevent electrolytic corrosion of the rolling bearing, and release electromagnetic noise through between the rotating member and the fixing member. The shaft grounding member includes the spring plate, and the spring plate includes the annular portion, the coupling portion extending from the annular portion in the radial direction, and the elastic portion bent from the coupling portion in the axial direction of the rotating wheel. Therefore, since the area of the elastic portion can be freely designed, and it is not necessary to increase the number and size of the coupling portions, excellent conductivity can be ensured without inhibiting the discharge of the lubricant.

In the shaft grounding member according to the present disclosure, the biasing force of the soft conductive member to the rotating member by the spring plate is not so strong, and the soft conductive member mounted on the elastic portion is a soft material. Therefore, generation of abrasion powder can be reduced, and damage to the rotating wheel which is a mating member is also small.

The shaft grounding member according to the present disclosure can be used with the existing rolling bearing without requiring any processing on the rolling bearing and without the restriction on the type of the rolling bearing, and thus the versatility is fairly high. Further, the spring plate is a thin plate, and an increase in space for the bearing unit to be mounted can be prevented.

Since the bearing unit according to the present disclosure is provided with the shaft grounding member according to the present disclosure, excellent conductivity can be ensured without inhibiting the discharge of the lubricant, and the shaft voltage can be reduced. In the bearing unit according to the present disclosure, it is possible to reduce the generation of abrasion powder and damage to members, and to prevent a decrease in durability due to the generation of frictional heat.

### BRIEF DESCRIPTION OF THE DRAWINGS

The present disclosure will become more fully understood from the detailed description given hereinbelow and the accompanying drawing which is given by way of illustration only, and thus is not limitative of the present disclosure and wherein:
FIGS. 1A and 1B show an example of a shaft grounding member according to a first embodiment of the present disclosure applied to an inner ring rotating type bearing unit, in which FIG. 1A is a perspective view thereof, and FIG. 1B is a front view of FIG. 1A;
FIG. 2 is a perspective view showing an example of the bearing unit in which the shaft grounding member shown in FIGS. 1A and 1B is incorporated;
FIG. 3 is a cross-sectional view showing an example of the bearing unit in which the shaft grounding member shown in FIGS. 1A and 1B is incorporated;
FIGS. 4A and 4B show a shaft grounding member according to a first modification of the first embodiment of the present disclosure, in which FIG. 4A is a perspective view thereof, and FIG. 4B is a front view of FIG. 4A;
FIGS. 5A and 5B show a shaft grounding member according to a second modification of the first embodiment of the present disclosure, in which FIG. 5A is a perspective view thereof, and FIG. 5B is a front view of FIG. 5A;
FIGS. 6A and 6B show an example of a shaft grounding member according to a second embodiment of the present disclosure applied to an outer ring rotating type bearing unit, in which FIG. 6A is a perspective view thereof, and FIG. 6B is a front view of FIG. 6A; and
FIG. 7 is a cross-sectional view showing an example of the bearing unit in which the shaft grounding member shown in FIGS. 6A and 6B is incorporated.

### DETAILED DESCRIPTION OF THE INVENTION

Hereinafter, embodiments of the present disclosure will be described in detail with reference to the drawings. The present disclosure is not limited to the embodiments to be described below, and can be implemented by being freely changed without departing from the gist of the present disclosure. Hereinafter, a "shaft grounding member for a rolling bearing" is simply referred to as a "shaft grounding member", and a "rolling bearing unit" is simply referred to as a "bearing unit".

First Embodiment: Shaft Grounding Member and Bearing Unit for Inner Ring Rotation

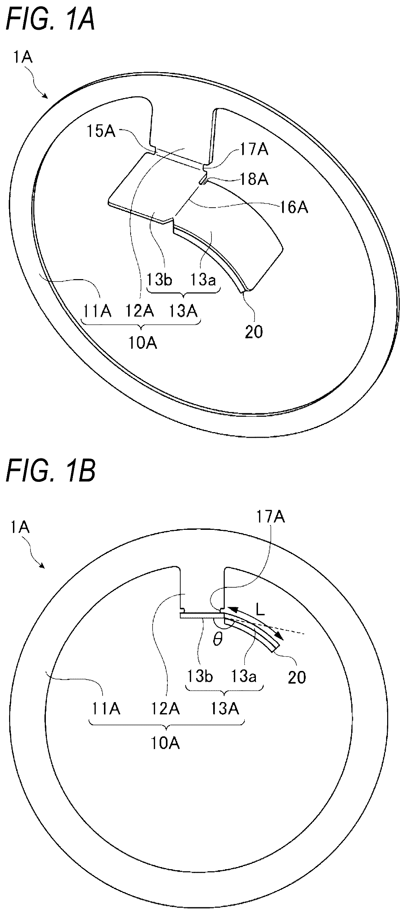

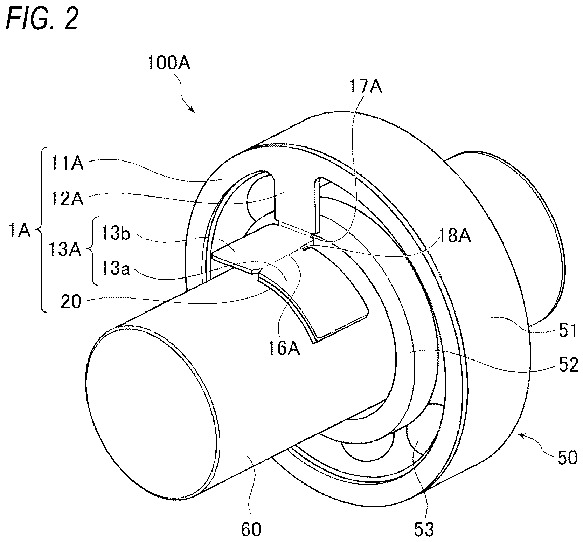

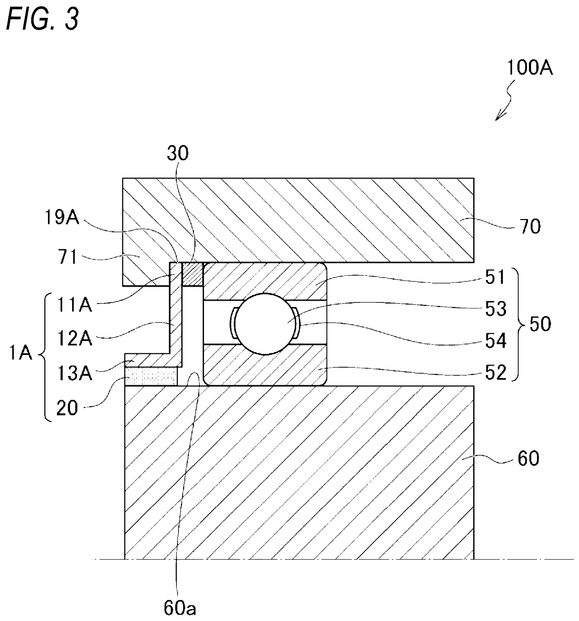

FIGS. 1A and 1B show a shaft grounding member for inner ring rotation according to a first embodiment of the present disclosure, in which FIG. 1A is a perspective view thereof, and FIG. 1B is a front view of FIG. 1A. FIG. 2 is a perspective view showing an example of a rolling bearing provided with the shaft grounding member shown in FIGS. 1A and 1B. FIG. 3 is a cross-sectional view showing an example of a bearing unit in which the shaft grounding member shown in FIGS. 1A and 1B is incorporated.

A shaft grounding member 1A shown in FIGS. 1A and 1B includes a spring plate 10A and a soft conductive member 20. The spring plate 10A includes an annular portion 11A, one coupling portion 12A extending continuously from the annular portion 11A toward the center in the radial direction, and an elastic portion 13A bent from the distal end of the coupling portion 12A. The elastic portion 13A includes a first flat plate portion 13b extending in the axial direction of a rotating ring of a rolling bearing to be described later, and a curved plate portion 13a extending from the first flat plate portion 13b while curving along the circumferential direction of the shaft (the rotating member). That is, the elastic portion 13A extends in the circumferential direction with respect to the coupling portion 12A. The "axial direction of the rotating ring" is synonymous with the "axial direction of the rotating member" in the present specification.

A bent portion 15A extending linearly is formed between the coupling portion 12A and the first flat plate portion 13b, and notches 17A are formed on both sides of the bent portion 15A, so that the elastic portion 13A is easily bent. Notches 18A are formed on both sides of a boundary portion 16A between the first flat plate portion 13b and the curved plate portion 13a, so that the curved plate portion 13a is easily bent.

The spring plate 10A is entirely made of a thin plate of a conductive material such as a metal. When the conductive material is a metal, stainless steel is preferable for reasons such as easy processing and less generation of rust.

The soft conductive member 20 is mounted on an inner diameter side surface of the curved plate portion 13a, that is, a surface facing the shaft by an adhesive or the like.

As the soft conductive member 20, a member obtained by mixing or supporting a conductive material in a soft base material, or a commercially available member referred to as a "conductive sheet" or the like can be used. Examples of the soft base material include at least one selected from a porous body and a resin-impregnated porous body. As the porous body, paper, cloth, a nonwoven fabric, a resin sheet, a sponge which is a soft porous body, or the like can be used. Among these materials, as the base material, it is preferable to use at least one selected from a nonwoven fabric, a woven fabric and a soft porous body such as a sponge, and a resin-impregnated nonwoven fabric, a resin-impregnated woven fabric and a resin-impregnated soft porous body such as a sponge. When a resin-impregnated material obtained by impregnating a porous body with resin is used as the base material of the soft conductive member 20, the skeleton is coated with resin, thereby improving the strength of the soft conductive member 20 to a desired level while maintaining the soft characteristics. Therefore, in particular, it is more preferable to use, as the base material, at least one selected from a resin-impregnated nonwoven fabric, a resin-impregnated woven fabric and a resin-impregnated soft porous body such as a sponge.

When a resin-impregnated porous body is used as the base material, a thermosetting resin is preferably used as the resin with which the porous body is impregnated. The thermosetting resin may be any varnish-shaped resin that can be impregnated into the base material and that is thermosetting, and examples of the thermosetting resin include a phenol resin, a modified phenol resin, an epoxy resin, a modified epoxy resin, a polyimide resin, a silicone resin, a polyester resin, a polyurethane resin, and a rubber resin.

As the conductive material to be mixed into or supported on the soft base material, it is preferable to use at least one selected from metal fibers such as silver, copper, gold, aluminum, and stainless steel, pulverized products and powders thereof, conductive carbon fibers, and pulverized products and powders thereof.

As shown in FIGS. 2 and 3, a bearing unit 100A according to the first embodiment includes a rolling bearing 50, and the shaft grounding member 1A shown in FIGS. 1A and 1B is mounted thereon. The rolling bearing 50 includes an outer ring 51 constituting one bearing ring, an inner ring 52 constituting the other bearing ring, and a plurality of rolling elements (balls) 53 rollably held between the outer ring 51 and the inner ring 52 by a retainer 54, and the rolling elements 53 are smoothly rolled by an in-bearing lubricant such as a lubricating oil or a grease composition. Here, the rotating ring is the inner ring 52, and a shaft (a rotating member) 60 directly connected to a motor (not shown) is fitted into the inner diameter side of the inner ring 52. The outer ring 51 is a fixed ring and is fixed to a housing 70.

As shown in FIG. 3, the annular portion 11A of the spring plate 10A and a spacer 30 are held by the outer ring 51 and a flange portion 71 protruding to the inner diameter side of the housing 70. Therefore, the outer diameter side of the outer ring 51 and an outer peripheral end surface 19A of the annular portion 11A in the spring plate 10A are fixed in a state of abutting against the housing 70.

The soft conductive member 20 is mounted on the surface (the lower side in FIG. 3) of the elastic portion 13A of the spring plate 10A facing a peripheral surface 60a of the shaft 60. Therefore, the soft conductive member 20 can abut against at least a part of the peripheral surface 60a of the shaft 60. In the present embodiment, the curved plate portion 13a extends from the first flat plate portion 13b while being curved along the circumferential direction of the shaft 60.

In the inner ring rotating type bearing unit 100A in which the shaft grounding member 1A is not incorporated, the current from the motor normally flows through the shaft 60 to the inner ring 52, and the rolling elements 53 and the outer ring 51 are energized inside the bearing, causing electrolytic corrosion in the rolling bearing 50. In contrast, in the first embodiment, the soft conductive member 20 of the shaft grounding member 1A abuts against the peripheral surface 60a of the shaft 60, and the annular portion 11A of the spring plate 10A is electrically connected to the side surface of the outer ring 51 via the conductive spacer 30.

In the bearing unit 100A implemented as described above, the current from a motor (not shown) that drives the shaft 60 flows from the shaft 60 to the soft conductive member 20. Thereafter, the current flows to the elastic portion 13A, the coupling portion 12A, and the annular portion 11A of the spring plate 10A through the soft conductive member 20, and flows from the annular portion 11A to the grounded housing 70 directly or via the spacer 30 and the outer ring 51. Since the outer ring 51 has a large contact area with the housing 70, the current flowing through the outer ring 51 does not pass through the rolling element 53 and flows into the housing 70. In this way, in the shaft grounding member 1A, since the shaft 60 which is the rotating member and the housing 70 which is the fixing member are grounded, the inside of the bearing is not energized, and the shaft voltage which is the potential difference between the rotating member and the fixing member can be significantly reduced. Therefore, electrolytic corrosion of the rolling bearing 50 can be prevented, and electromagnetic noise can be released through between the shaft 60 which is the rotating member and the housing 70 which is the fixing member.

In the shaft grounding member 1A, the area of the elastic portion 13A can be freely designed, and the number and size of the coupling portions 12A can also be freely designed. For example, in order to increase the area of the elastic portion 13A, it is possible to increase the number of the coupling portions 12A or to increase the width thereof. However, by reducing the width of the coupling portion 12A or reducing the number of the coupling portions 12A, the area of the elastic portion 13A can be increased without inhibiting the discharge of the lubricant sealed or applied inside the bearing, and excellent conductivity can be ensured. The shaft grounding member 1A according to the present embodiment can be used with the existing rolling bearing without requiring any processing on the rolling bearing and without the restriction on the type of the rolling bearing, and thus the versatility is fairly high. Further, the spring plate 10A is a thin plate, and an increase in space for the bearing unit to be mounted can also be minimized.

Since the peripheral surface 60a of the shaft 60 is in contact with the soft conductive member 20, the peripheral surface 60a of the shaft 60 is not damaged, and the rotation torque of the shaft 60 can be prevented from decreasing. Further, since the biasing force of the soft conductive member 20 to the peripheral surface 60a of the shaft 60 by the spring plate 10A is not fairly large, generation of the abrasion powder can be prevented.

As shown in FIG. 1B, the first flat plate portion 13b and the curved plate portion 13a in the elastic portion 13A may be bent at the boundary portion therebetween. When the angle between the first flat plate portion 13b and the tangent line in the vicinity of the above-described boundary line in the curved plate portion 13a is defined as a bending angle θ, the bending angle θ may be appropriately set such that the soft conductive member 20 abuts against the peripheral surface 60a of the shaft 60. The biasing force of the soft conductive member 20 to the peripheral surface 60a of the shaft 60 can also be adjusted by the bending angle θ. Since the elastic portion 13A of the shaft grounding member 1A is elastically deformed by reducing the bending angle θ, the biasing force of the soft conductive member 20 to the shaft 60 can be increased. As a result, by reducing the gap between the shaft 60 and the peripheral surface 60a and increasing the contact area, the axial voltage between the rotating member and the fixing member can be stably reduced. Conversely, by increasing the bending angle θ, the biasing force can be reduced, and generation of the abrasion powder can be prevented. Further, an extension length L of the curved plate portion, the size of the soft conductive member 20, and the size of the curve of the curved plate portion 13a may also be appropriately set, and by adjusting the extension length L and the sizes, the above-described axial voltage can be further stably reduced.

In FIG. 3, the outer peripheral end surface 19A of the annular portion 11A and the spacer 30 abut against the housing 70, and may not abut against the housing 70.

The annular portion 11A and the spacer 30 may be held between the outer ring 51 and the flange portion 71 or a pressing member replacing the flange portion 71. In this case, the current flowing through the annular portion 11A flows to the housing 70 via the outer ring 51 and the pressing member.

In FIGS. 1A and 1B, the curved plate portion 13a extends from one side of the first flat plate portion 13b, and may extend to both sides of the first flat plate portion 13b. The shape of the first flat plate portion 13b does not need to completely match the curved shape in the circumferential direction of the shaft.

Here, the thickness of the spacer 30 is not limited, and the annular portion 11A of the shaft grounding member 1A may directly abut against the side surface of the outer ring 51 without interposing the spacer 30 as long as the coupling portion 12A provided in the shaft grounding member 1A can be implemented so as not to come into contact with the inner ring 52.

### First Modification of Shaft Grounding Member for Inner Ring Rotation

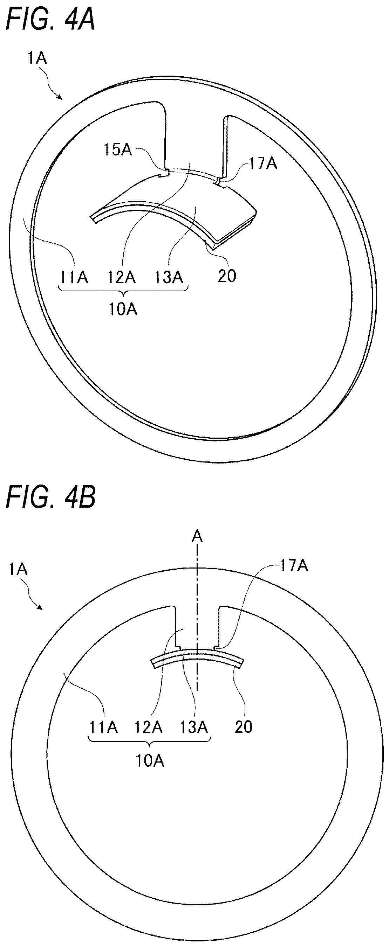

FIGS. 4A and 4B are views showing a first modification of the shaft grounding member for inner ring rotation shown in FIGS. 1A and 1B, in which FIG. 4A is a perspective view thereof, and FIG. 4B is a front view of FIG. 4A.

In the first modification, the elastic portion 13A is a portion bent in the axial direction of the shaft 60 from the distal end of the coupling portion 12A, and extends to both sides of the shaft 60 with respect to the coupling portion 12A in the circumferential direction while being curved along the surface of the shaft 60.

### Second Modification of Shaft Grounding Member for Inner Ring Rotation

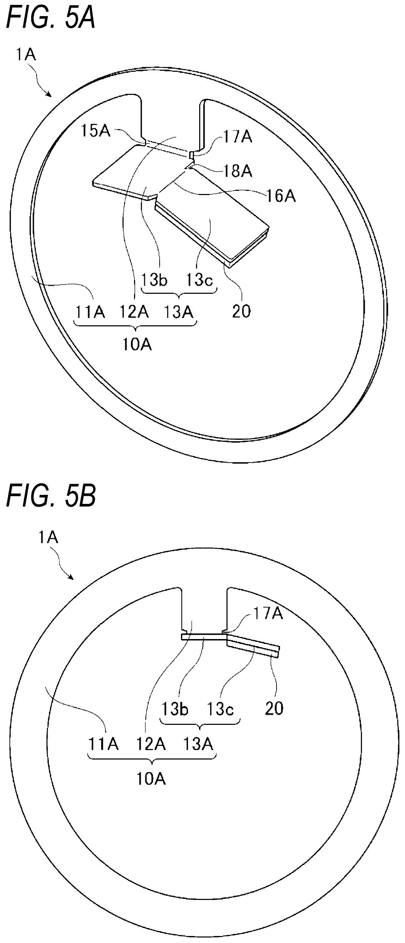

FIGS. 5A and 5B are views showing a second modification of the shaft grounding member for inner ring rotation shown in FIGS. 1A and 1B, in which FIG. 5A is a perspective view thereof, and FIG. 5B is a front view of FIG. 5A.

In the second modification, the elastic portion 13A includes a first flat plate portion 13b bent in the axial direction of the shaft (the rotating member) of the rolling bearing, and a second flat plate portion 13c extending from the first flat plate portion 13b while being bent along the circumferential direction of the rotating member.

In FIGS. 5A and 5B, the second flat plate portion 13c extends from one side of the first flat plate portion 13b, and may extend to both sides of the first flat plate portion 13b. In the present disclosure, the elastic portion may be formed of three or more flat plate portions, and may extend in the circumferential direction of the rotating member while being repeatedly bent.

As shown in the first modification and the second modification described above, in the present embodiment, since the extension length and the bending angle can be freely designed, it is possible to prevent energization to the inside of the bearing, to more stably reduce the shaft voltage, which is the potential difference between the rotating member and the fixing member, to prevent electrolytic corrosion of the rolling bearing, and to reduce electromagnetic noise through between the rotating member and the fixing member.

### Second Embodiment: Shaft Grounding Member and Bearing Unit for Outer Ring Rotation

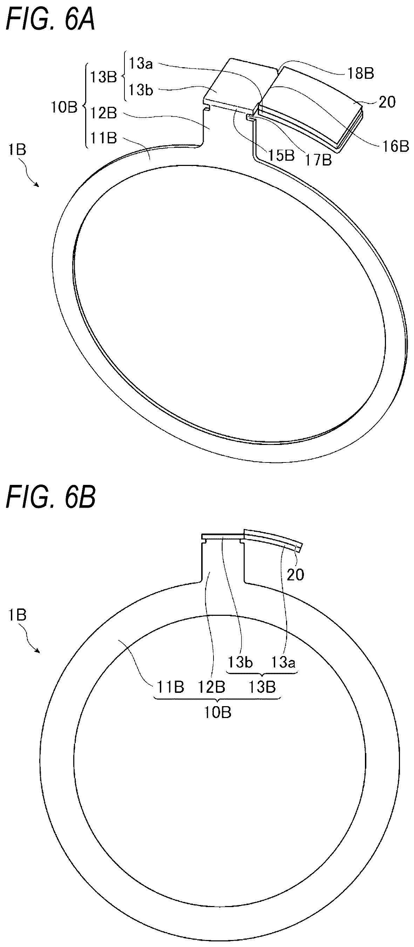

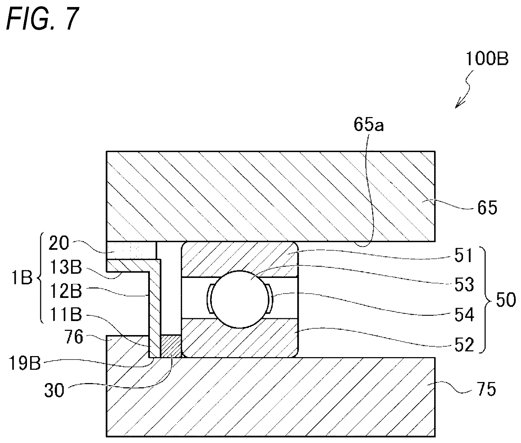

A case in which the inner ring 52 of the rolling bearing 50 is a rotating ring has been described in the first embodiment, and a bearing unit in which the outer ring 51 is a rotating ring will be described in a second embodiment. FIGS. 6A and 6B are views showing a shaft grounding member for outer ring rotation, in which FIG. 6A is a perspective view thereof, and FIG. 6B is a front view of FIG. 6A. FIG. 7 is a cross-sectional view showing an example of a bearing unit in which the shaft grounding member shown in FIGS. 6A and 6B is incorporated.

In the bearing unit according to the second embodiment, the same members as those in the first embodiment are denoted by the same reference signs, and the detailed description thereof will be omitted or simplified.

As shown in FIGS. 6A and 6B, a shaft grounding member 1B for outer ring rotation includes a spring plate 10B and the soft conductive member 20. The spring plate 10B includes an annular portion 11B, one coupling portion 12B extending continuously from the annular portion 11B toward the outer periphery in the radial direction, and an elastic portion 13B bent from the distal end of the coupling portion 12B. The elastic portion 13B includes the first flat plate portion 13b bent in the axial direction of the rotating member to be described later, and the curved plate portion 13a extending from the first flat plate portion 13b while curving along the circumferential direction of the rotating member.

The soft conductive member 20 is mounted on the surface of the curved plate portion 13a on the side facing an inner peripheral surface 65a of a rotating member 65 by an adhesive or the like, and the spring plate 10B and the soft conductive member 20 constitute the shaft grounding member 1B.

As shown in FIG. 7, the bearing unit 100B according to the second embodiment includes the rolling bearing 50, and the shaft grounding member 1B is mounted thereon. In the present embodiment, the inner ring 52 of the rolling bearing 50 is a fixed ring and is fixed to a fixing member 75. The outer ring 51 is a rotating ring and is fitted to the rotating member 65 directly connected to a motor (not shown). The shaft grounding member 1B is mounted on the bearing unit 100B in a state in which the surface on which the soft conductive member 20 is mounted faces the inner peripheral surface 65a of the rotating member 65.

The annular portion 11B of the shaft grounding member 1B and the spacer 30 are sandwiched between the inner ring 52 and the flange portion 76 protruding to the outer diameter side of the fixing member 75. Therefore, the inner diameter side of the inner ring 52 and the inner peripheral end surface 19B of the annular portion 11B in the spring plate 10B are fixed in a state of abutting against the fixing member 75.

The soft conductive member 20 is mounted on the surface (the upper side in FIG. 7) of the elastic portion 13B of the spring plate 10B facing the inner peripheral surface 65a of the rotating member 65. Therefore, the soft conductive member 20 can abut against at least a part of the inner peripheral surface 65a of the rotating member 65. In the second embodiment, as in the first embodiment, the curved plate portion 13a also extends from the first flat plate portion 13b while being curved along the circumferential direction of the shaft 60.

In the outer ring rotating type bearing unit 100B in which the shaft grounding member 1B is not incorporated, the current from the motor normally flows through the rotating member 65 to the outer ring 51, and the rolling elements 53 and the inner ring 52 are energized inside the bearing, causing electrolytic corrosion in the rolling bearing 50. In contrast, in the second embodiment, the soft conductive member 20 of the shaft grounding member 1B abuts against the inner peripheral surface 65a of the rotating member 65, and the annular portion 11B of the spring plate 10B is electrically connected to the side surface of the inner ring 52 via the conductive spacer 30.

In the bearing unit 100B implemented as described above, the current from a motor (not shown) that drives the rotating member 65 flows to the soft conductive member 20. Thereafter, the current flows from the rotating member 65 to the soft conductive member 20, flows to the elastic portion 13B, the coupling portion 12B, and the annular portion 11B of the spring plate 10B, and flows from the annular portion 11B to the grounded fixing member 75 directly or via the spacer 30 and the inner ring 52. Since the inner ring 52 has a large contact area with the fixing member 75, the current flowing through the inner ring 52 flows to the fixing member 75 without passing through the rolling element 53. In this way, by grounding the rotating member 65 and the fixing member 75, the inside of the bearing is not energized, and the shaft voltage, which is the potential difference between the rotating member and the fixing member, can be significantly reduced. Therefore, electrolytic corrosion of the rolling bearing 50 can be prevented, and electromagnetic noise can be released through between the rotating member 65 and the fixing member 75.

Similarly to the first embodiment, the area of the elastic portion 13B and the number and size of the coupling portions 12B can be freely designed. Since the coupling portion 12B extends continuously from the annular portion 11B toward the outer periphery in the radial direction, it is possible to ensure excellent conductivity without inhibiting discharge of the lubricant sealed or applied inside the bearing. The shaft grounding member 1B according to the present disclosure can be used with the existing rolling bearing without requiring any processing on the rolling bearing and without the restriction on the type of the rolling bearing, and thus the versatility is fairly high. Further, the spring plate 10B is a thin plate, and an increase in space for the bearing unit to be mounted can also be minimized.

Since the inner peripheral surface 65a of the rotating member 65 is in contact with the soft conductive member 20, the rotating torque of the rotating member 65 can be reduced without damaging the inner peripheral surface 65a of the rotating member 65. Since the biasing force of the soft conductive member 20 to the side surface of the inner peripheral surface 65a of the rotating member 65 by the spring plate 10B is not fairly large, generation of the abrasion powder can be prevented.

Similarly to the first embodiment, by appropriately setting the bending angle between the curved plate portion 13a and the first flat plate portion 13b in FIG. 6B, the biasing force to the inner peripheral surface 65a of the rotating member 65 can be adjusted. Accordingly, the effect of reducing the shaft voltage between the rotating member 65 and the fixing member 75 and the effect of preventing generation of the abrasion powder can be further improved. The extension length of the curved plate portion 13a, the size of the soft conductive member 20, and the size of the curve of the curved plate portion 13a may also be appropriately set, and by adjusting the extension length and the sizes, the above-described axial voltage can be further stably reduced.

In the second embodiment, an inner peripheral end surface 19B of the annular portion 11B and the spacer 30 abut against the fixing member 75, and may not abut against the fixing member 75.

The annular portion 11B and the spacer 30 may be held between the inner ring 52 and the flange portion 76 or a pressing member replacing the flange portion 76. In this case, the current flowing through the annular portion 11B flows to the fixing member 75 via the inner ring 52 and the pressing member.

Here, the thickness of the spacer 30 is not limited, and the annular portion 11B of the shaft grounding member 1B may directly abut against the side surface of the inner ring 52 without interposing the spacer 30 as long as the coupling portion 12B provided in the shaft grounding member 1B can be implemented so as not to come into contact with the outer ring 51.

Similarly to the first modification of the first embodiment described above, the elastic portion 13B may include a continuous curved plate portion and may extend from the distal end side of the coupling portion while being curved along the circumferential direction on both sides of the rotating member.

Similarly to the second modification of the first embodiment described above, the elastic portion 13B may include the first flat plate portion 13b bent in the axial direction of the fixing member of the rolling bearing and the second flat plate portion extending from the first flat plate portion while being bent along the circumferential direction of the rotating member. The second flat plate portion may extend from one side of the first flat plate portion 13b or may extend from both sides of the first flat plate portion 13b.

In this way, by changing the shape and the like of the elastic portion and increasing the contact area with the rotating member, the shaft voltage can be efficiently reduced, the conductivity can be further improved, and the electromagnetic noise can be reduced.

In common to all the embodiments, the shape of the soft conductive member 20 is not limited. The soft conductive member 20 may be formed of a plurality of small pieces.

The shaft grounding member according to the present disclosure can also be suitably used in the case of achieving only one of prevention of electrolytic corrosion and prevention of generation of electromagnetic noise.

In the above-described embodiments, the case has been described in which the number of coupling portions is one in consideration of the discharge property of the lubricant. However, in the present disclosure, the number of coupling portions is not limited to one, and may be plural.

## Claims

1. A shaft grounding member for a rolling bearing, the shaft grounding member being mounted on a rolling bearing unit including the rolling bearing in which one bearing ring is a fixed ring and the other bearing ring is a rotating ring, the shaft grounding member comprising:
a spring plate including an annular portion, a coupling portion extending continuously from the annular portion in a radial direction, and an elastic portion bending from the coupling portion in an axial direction of the rotating ring, the spring plate being made of a thin plate of a conductive material; and
a soft conductive member mounted on a surface of the elastic portion that faces a rotating member to which the rotating ring is fitted,
wherein the soft conductive member is capable of abutting against at least a part of a peripheral surface of the rotating member.

2. The shaft grounding member for a rolling bearing according to claim 1,
wherein the soft conductive member is made of at least one selected from a resin-impregnated non-woven fabric, a non-woven fabric, a resin-impregnated woven fabric, a woven fabric, a resin-impregnated soft porous body, and a soft porous body.

3. The shaft grounding member for a rolling bearing according to claim 1,
wherein the annular portion is pressed against a side surface of the fixed ring with a spacer interposed therebetween.

4. The shaft grounding member for a rolling bearing according to claim 1,
wherein the spring plate includes the annular portion, the one coupling portion extending continuously from the annular portion in the radial direction, and an elastic portion bending from the coupling portion in the axial direction of the rotating ring.

5. The shaft grounding member for a rolling bearing according to claim 4,
wherein the elastic portion extends while being curved or bent along a circumferential direction of the rotating member.

6. A rolling bearing unit comprising:
a rolling bearing in which one bearing ring is a fixed ring and the other bearing ring is a rotating ring; and
the shaft grounding member for a rolling bearing according to any one of claims 1 to 5.
